# EUROPEAN PATENT APPLICATION

(11) **EP 2 574 800 A1**
(43) Date of publication of application: **03.04.2013**
(21) Application number: 11183011.3
(22) Date of filing: 27.09.2011
(51) Int. Cl.: F16B 25/00

(54) **Screw**

(71) Applicant: Peak Innovation Limited, Hong Kong (HK); Shen Fung Screws Co., Ltd., Kaohsiung 825, Taipei (TW)
(72) Inventor: Huang, Yuan-Chieh, Kaohsiung County 82547 (TW); Chen, Teh-Ling, Kaohsiung County 82547 (TW)
(74) Representative: Duyver, Jurgen Martha Herman

(57) **Abstract**

The present invention discloses a screw, which comprises a shaft, a head and a thread. The shaft has an awl on one end thereof. The head is formed on the other end of the shaft and has an engagement groove. The thread is formed on the surface of the shaft and spirally extends from the awl to the head. The thread has two surfaces whose edges are connected with each other to form a cutting edge. The thread includes at least one receiving groove having a guiding face, a collecting face and a connecting face. The connecting face connects the guiding face and the collecting face to form a debris-receiving space. The debris-receiving surface penetrates the two surfaces of the thread. The connecting face has a crushing portion with a ragged surface. Thereby, the screw can provide higher locking strength.

## Description

### BACKGROUND OF THE INVENTION

### Field of the Invention

The present invention relates to a screw, particularly to a screw, which can be fast driven into objects to integrate the objects.

### Description of the Related Art

Refer toFig.1 for a conventional screw. The conventional screw comprises a shaft 81, a head 82 and a thread 83. The shaft 81 has an awl 811 on one end thereof. The head 82 is formed on the other end of the shaft 81 and has an engagement groove 821 that can engage with a tool. The thread 83 is formed on the surface of the shaft 81 and spirally extends from the awl 811 to the head 82. The thread 83 has several notches 84 near the awl 811. The notch 84 functions as a blade. When a tool engages with the engagement groove 821 to drive the screw into an object, the blades can tap the object.

However, the notch 84 is only fabricated to function as a blade. Therefore, the notch 84 does not have sufficient room to receive debris. Thus, the debris generated in tapping the object will be blocked between the screw and the object. Consequently, the screw cannot be smooth rotated into the object, and driving the screw into the object may even crack or burst the object.

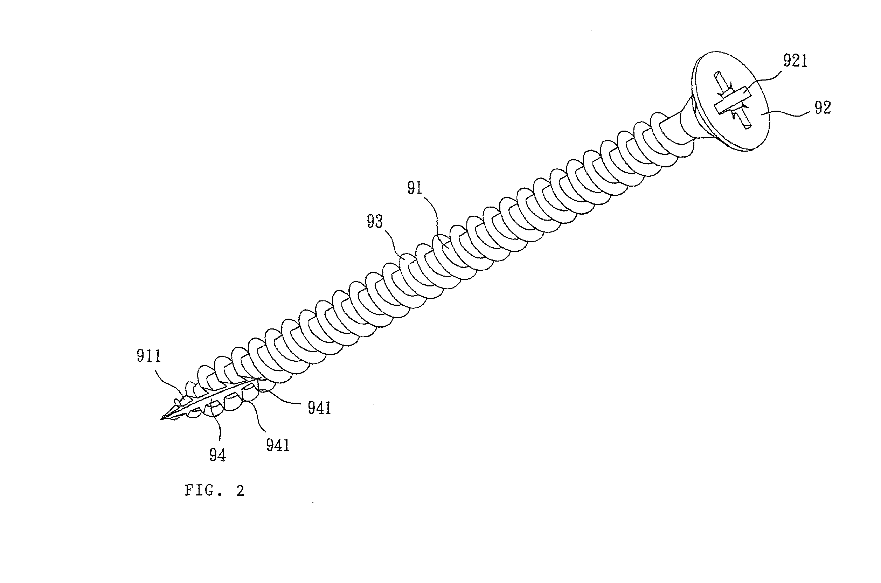

Refer to Fig.2 for another conventional screw. The conventional screw comprises a shaft 91, a head 92 and a thread 93. The shaft 91 has an awl 911 on one end thereof. The head 92 is formed on the other end of the shaft 91 and has an engagement groove 921 that can engage with a tool. The thread 93 is formed on the surface of the shaft 91 and spirally extends from the awl 911 to the head 92. The conventional screw has an axially-extending receiving groove 94 on the awl 911 of the shaft 91.The receiving groove 93 penetrates the thread 93 near the awl 911 to form several blades 941. When a tool engages with the engagement groove 921 to drive the screw into an object, the blades 941 can tap the object, and the debris generated in tapping the object is received by the receiving groove 94.

The receiving groove 94 indeed provides room to receive debris. However, the debris inside the receiving groove 94 has many gaps, which should decrease the locking force between the screw and the object. In fabrication, a thread-rolling process is used to form the thread 93. Then, a cutting process is used to form the receiving groove 94. Therefore, the fabrication of the conventional screw needs at least two processes and has a higher cost.

### SUMMARY OF THE INVENTION

One objective of the present invention is to provide a screw, which can collect debris, and which can be smooth and fast driven into objects without cracking or bursting the objects.

Another objective of the present invention is to provide a screw, which can squeeze the debris generated in tapping the objects to fill up the receiving groove, whereby the objects are securely fastened.

A further objective of the present invention is to provide a screw, which is fabricated in a single process, whereby the cost is reduced.

To achieve the abovementioned objectives, the present invention proposes a screw, which comprises a shaft having an awl on one end thereof; a head formed on the other end of the shaft and having an engagement groove; and a thread formed on the surface of the shaft, spirally extending from the awl to the head and having two surfaces. The edges of the two surfaces connect to form a cutting edge. At least one receiving groove is formed on the cutting edge. The receiving groove has a guiding face, a collecting face and a connecting face. The connecting face connects the guiding face and the collecting face and has a crushing portion with a ragged surface. The guiding face, the collecting face and the connecting face form a debris-receiving space. The debris-receiving space penetrates the two surfaces of the thread.

### BRIEF DESCRIPTION OF THE DRAWINGS

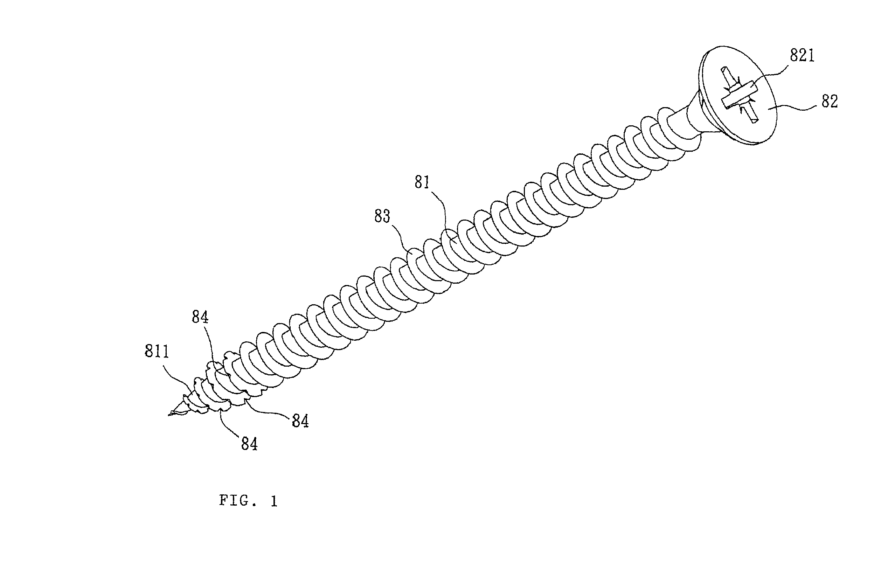

Fig.1 is a perspective view schematically showing the structure of a first conventional screw;
Fig.2 is a perspective view schematically showing the structure of a second conventional screw;
Fig.3 is a perspective view schematically showing the structure of a screw according to a first embodiment of the present invention;
Fig.4 is a partially enlarged view of Fig.3;
Fig.5 is a sectional view schematically showing the structure of the screw according to the first embodiment of the present invention;
Fig.6 is a diagram schematically showing the application of the screw according to the first embodiment of the present invention;
Fig.7 is a sectional view schematically showing the application of the screw according to the first embodiment of the present invention;
Fig.8 is a partially enlarged view schematically showing the structure of a screw according to a second embodiment of the present invention;
   and
Fig.9 is a sectional view schematically showing the structure of the screw according to the second embodiment of the present invention.

### DETAILED DESCRIPTION OF THE INVENTION

Below, the embodiments are described in detail with the attached drawings to make easily understood the objectives, characteristics and advantages of the present invention.

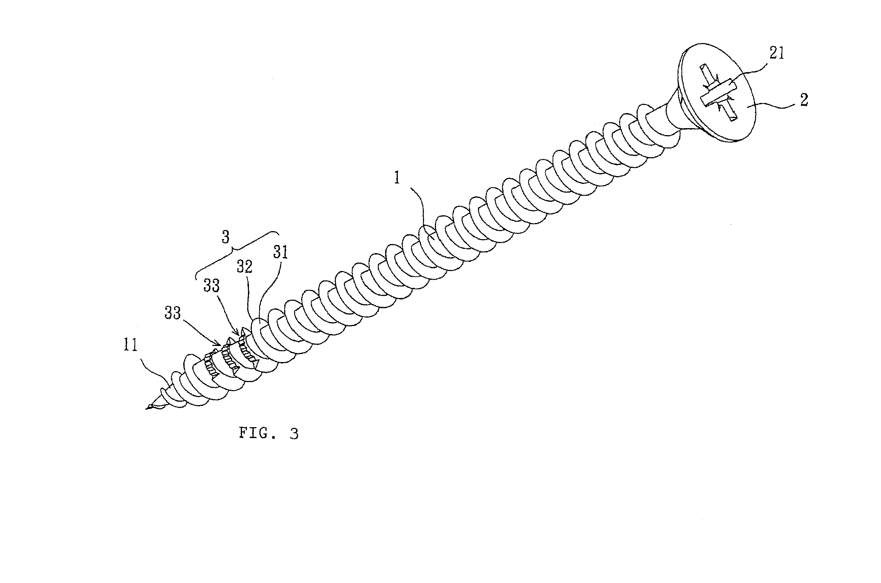

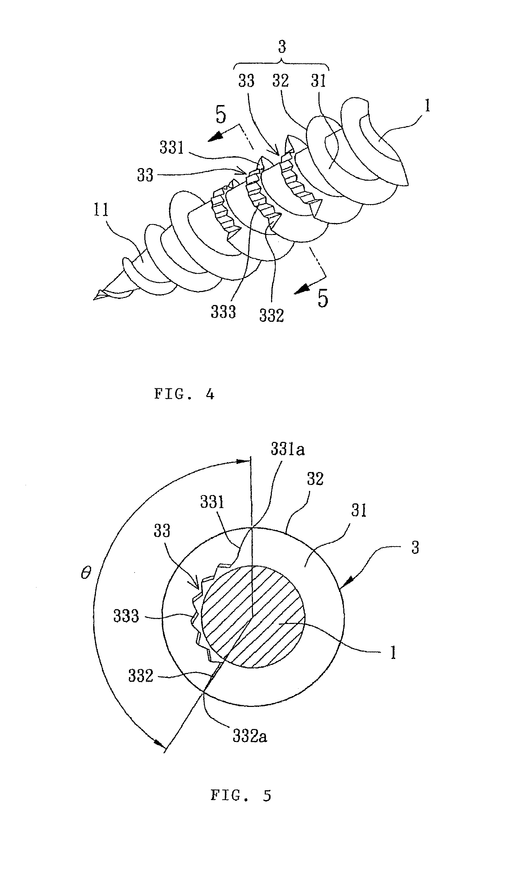

Refer to Fig.3 and Fig.4 for a first embodiment of the present invention. The screw of the present invention comprises a shaft 1, a head 2 and a thread 3, wherein the head 2 is formed on one end of the shaft 1, and wherein the thread 3 is formed on the surface of the shaft 1, whereby the shaft 1 and the thread 3 can be driven into at least one object by a tool.

One end of the shaft 1 is preferably fabricated into an awl 111. The head 2 is formed on the other end of the shaft 1. The diameter of the head 2 is larger than the maximum diameter of the shaft 1. The head 2 has an engagement groove 21 to engage with a tool. The engagement groove 21 matches one of the tools and may be in form of a cruciform groove, a single transverse slot, or a polygonal hole.

The thread 3 is spirally formed on the surface of the shaft 1. The thread 3 has two ends. One end of the thread 3 extends to the awl 11 of the shaft 1. The other end extends to the head 2. The thread 3 has two surfaces. Each surface has one edge connecting with the surface of the shaft 1. The other two edges of the two surfaces connect with each other to form a cutting edge 32.

Refer to Figs.3-5. The cutting edge 32 of the thread 3 has at least one receiving groove 33. The receiving groove 33 has a guiding face 331, a collecting face 332 and a connecting face 333. The connecting face 333 connecting the guiding face 331 and the collecting face 332. The guiding face 331, the collecting face 332 and the connecting face 333 jointly form a debris-receiving space. The debris-receiving space extends from the cutting edge 32 toward the shaft 1 and penetrates the two surfaces 31 of the thread 3. It is preferred that the connecting face 333 does not contact the surface of the shaft 1.The receiving groove 33 neighbors the awl 11. The guiding face 331 is nearer to the awl 11 than the collecting face 332. The connecting face 333 has a crushing portion with ragged surface. In the first embodiment, the crushing portion has a plurality of parallel serrations. In one embodiment, the crushing portion contains a plurality of serrate and arrayed diamond-shape grains. In another embodiment, the crushing portion contains a plurality of serrate grains having an arbitrary geometrical shape.

The guiding face 331 is preferred to be an arc face. The collecting face 332 is preferred to be a plane. There is a contact point 331a between the guiding face 331 and the cutting edge 32. There is a contact point 332a between the collecting face 332 and the cutting edge 32. An angle θ is contained by the line connecting the contact point 331a and the center of the shaft 1 and the line connecting the contact point 332a and the center of the shaft 1. The angle θ is preferred to have a value of 90-270 degrees.

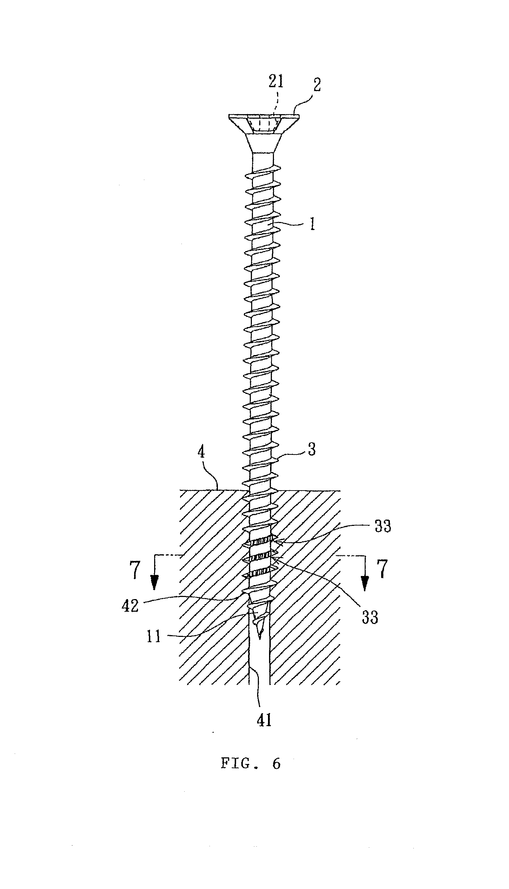

Refer to Fig.4 and Fig.6. When the screw of the present invention is intended to drive into an object 4, it is preferred to drill a guide hole 41 in the object 4. The diameter of the guide hole 41 is preferred to be equal to or greater than the maximum diameter of the shaft 1. However, the diameter of the guide hole 41 should not exceed the diameter of the cutting edge 32. In application, the awl 11 is aimed at the guide hole 41, and a tool is engaged with the engagement groove 21 of the head 2 to drive the screw to rotate. Thus, the thread 3 taps the inner surface of the guide hole 41 to form a tapped thread 42 on the inner surface of the guide hole 41, wherein the thread 3 on the surface of the awl 11 gradually expand the diameter of the tapped thread 42 from shallow to deep.

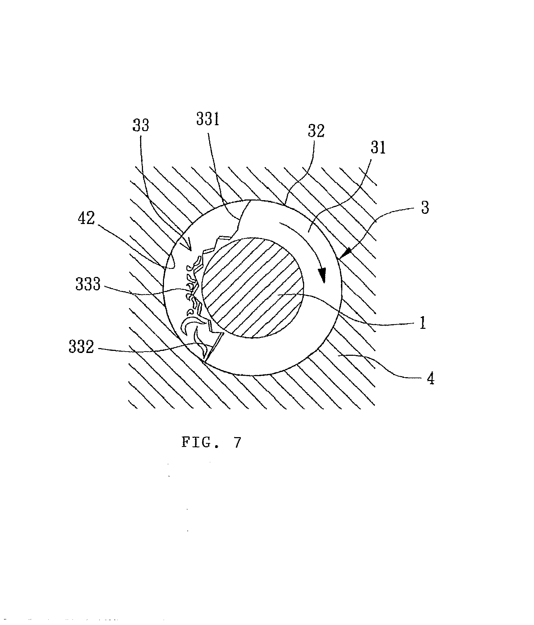

Refer to Fig.4, Fig.6 and Fig.7. When the receiving groove 33 of the thread 3 is rotated into the tapped thread 42, most of the debris generated in expanding the tapped thread 42 is guided by the guiding face 331 to the receiving groove 33. Further, the collecting face 332 cuts off and clean the debris remaining in the tapped thread 42. Thereby, no residual debris is left in the tapped thread 42, and the thread 3 of the screw can be smooth and fast rotated into the tapped thread 42.

When the screw is being driven into the guide hole 41, the receiving groove 33 drives the debris to move inside the tapped thread 42. Meanwhile, the crushing portion of the connecting face 333 minces the debris into finer fragments, and the collecting face 332 squeezes the fragments to fill up the entire receiving groove 33, whereby the screw is securely fastened to the object 40.

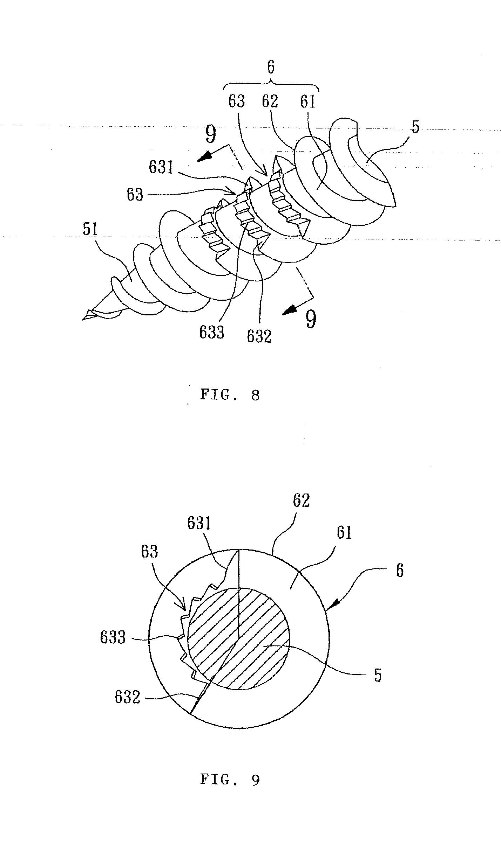

Refer to Fig.8 and Fig.9 for a second embodiment of the present invention. Similar to the first embodiment, the screw of the second embodiment also comprises a shaft 5, an awl 51, a thread 6, two thread surfaces 61, a cutting edge 62, at least one receiving groove 63, a guiding face 631, a collecting face 632, and a connecting face 633. The connecting face 633 of the second embodiment also has a crushing portion with a ragged surface. In the second embodiment, the crushing portion contains a plurality of oblique teeth inclined toward an identical direction. Each oblique tooth has an inclined face and a vertical face. The vertical face faces the guiding face 631, and the inclined face faces the collecting face 632.

Thereby, the crushing portion of the connecting face 633 can more easily mince the debris into finer fragments to increase the locking force between the screw and the object.

In the present invention, the receiving groove receives the debris generated by tapping an object. Further, the collecting face cuts off and clean the debris remaining in the tapped thread of the object. Thereby, no residual debris is left in the tapped thread, and the screw can be smooth and fast rotated into the object without cracking or bursting the object.

In the present invention, the ragged surface of the connecting face of the receiving groove can further mince the debris into finer fragments. Meanwhile, the collecting face can squeeze the finer fragments to fill up the entire receiving groove to increase the locking force between the screw and the object.

In fabrication, the thread and the receiving groove can be finished with only a thread-rolling process. Therefore, the screw of the present invention can be fabricated in a single process and has lower cost.

The embodiments described above are only to exemplify the present invention but not to limit the scope of the present invention. Any equivalent modification or variation according to the spirit of the present invention is to be also included within the scope of the present invention, which is based on the claims stated below.

## Claims

1. A screw comprising
a shaft having an awl on one end thereof;
a head formed on another end of said shaft and having an engagement groove; and
a thread formed on a surface of said shaft, spirally extending from said awl to said head, and having two surfaces,
wherein edges of said two surfaces connect with each other to form a cutting edge, and
wherein at least one receiving groove is formed on said cutting edge, and
wherein said receiving groove has a guiding face, a collecting face and a connecting face, and
wherein said connecting face connects said guiding face and said collecting face and has a crushing portion with a ragged surface, and wherein said guiding face, said collecting face and said connecting face form a debris-receiving space, and
wherein said debris-receiving space penetrates said two surfaces of said thread.

2. The screw according to claim 1, wherein said crushing portion contains a plurality of serrate grains having a geometrical shape.

3. The screw according to claim 2, wherein said crushing portion contains a plurality of parallel serrations or a plurality of serrated and arrayed diamond-shape grains.

4. The screw according to claim 2, wherein said crushing portion contains a plurality of oblique teeth inclined toward an identical

5. The screw according to claim 4, wherein each oblique tooth has an inclined face and a vertical face, and wherein said vertical face faces said guiding face, and wherein said inclined face faces said collecting face.

6. The screw according to claim 1, wherein said receiving groove neighbors said awl.

7. The screw according to claim 2, wherein said receiving groove neighbors said awl.

8. The screw according to claim 3, wherein said receiving groove neighbors said awl.

9. The screw according to claim 1, wherein said guiding face is an arc
face, and said collecting face is a plane.

10. The screw according to claim 2, wherein said guiding face is an arc
face, and said collecting face is a plane.

11. The screw according to claim 3, wherein said guiding face is an arc
face, and said collecting face is a plane.

12. The screw according to claim 9, wherein said guiding face is nearer to
said awl than said collecting face.

13. The screw according to claim 10, wherein said guiding face is nearer
to said awl than said collecting face.

14. The screw according to claim 11, wherein said guiding face is nearer
to said awl than said collecting face.

15. The screw according to claim 1, wherein there is a first contact point
between said guiding face and said cutting edge, and there is a second contact point between said collecting face and said cutting edge, and

16. The screw according to claim 2, wherein there is a first contact point
between said guiding face and said cutting edge, and there is a second contact point between said collecting face and said cutting edge, and wherein an angle is contained by a first line connecting said first contact point and a center of said shaft and a second line connecting said second contact point and said center of the shaft, and wherein said angle has a value of 90-270 degrees.

17. The screw according to claim 3, wherein there is a first contact point
between said guiding face and said cutting edge, and there is a second contact point between said collecting face and said cutting edge, and wherein an angle is contained by a first line connecting said first contact point and a center of said shaft and a second line connecting said second contact point and said center of the shaft, and wherein said angle has a value of 90-270 degrees.

18. The screw according to claim 1, wherein said connecting face does not
contact said surface of said shaft.

19. The screw according to claim 2, wherein said connecting face does not
contact said surface of said shaft.

20. The screw according to claim 3, wherein said connecting face does not
contact said surface of said shaft.
